# EUROPEAN PATENT SPECIFICATION

(11) **EP 0 890 456 B1**
(45) Date of publication and mention of the grant of the patent: **13.08.2003**
(21) Application number: 98304631.9
(22) Date of filing: 11.06.1998
(51) Int. Cl.: B60C 11/12, B60C 11/04, B60C 9/20, B60C 11/13

(54) **All-season pneumatic radial tire for passenger car**
Radialer PKW-Luftreifen für das ganze Jahr
Bandage pneumatique radial toutes saisons

(30) Priority: 08.07.1997 JP 18259797
(43) Date of publication of application: 13.01.1999
(73) Proprietor: Bridgestone Corporation, Tokyo (JP)
(72) Inventor: Himuro, Yasuo, Tachikawa-City, Tokyo (JP)
(74) Representative: Whalley, Kevin

(56) References cited:
- EP-A- 0 715 973
- US-A- 5 329 980
- PATENT ABSTRACTS OF JAPAN vol. 018, no. 274 (M-1611), 25 May 1994 (1994-05-25) & JP 06 048120 A (BRIDGESTONE CORP), 22 February 1994 (1994-02-22)

## Description

This invention relates to a pneumatic radial tire, particularly an all-season pneumatic radial tire for passenger cars.

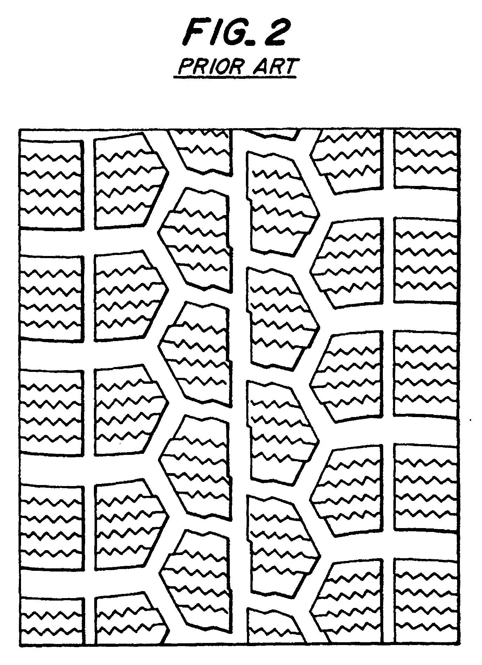

As shown in Fig. 2, the conventionally typical all-season pneumatic radial tire for passenger car has a tread pattern wherein a circumferential groove extends substantially in a straight line in a central portion of a tread (or so-called center groove) and plural circumferential grooves extending straightforward or zigzag in the circumferential direction are arranged on either side of the center groove and many blocks are formed at intervals in axial and circumferential directions of the tire by these circumferential grooves with lateral grooves arranged at an interval in the circumferential direction so as to cross the tread.

Such an all-season pneumatic radial tire is required to have various performances such as drainage performance in the running on a wet road surface, low noise, steering stability in the running on a dry road surface, braking, traction, straight running and cornering performances in the running on snow, braking performance on ice and the like.

Recently, it is demanded to develop all-season pneumatic radial tires having excellent drainage performance in the running on the wet road surface and noise reduction without remarkably sacrificing the steering stability in the running on the dry road surface, performances on snow, braking performance on ice and the like of the tire. A tire according to the preamble of claim 1 is disclosed in US-A-5 329 980. The central region of this known tire has a width corresponding to 20%-30% of the tread width.

It is, therefore, an object of the invention to provide an all-season pneumatic radial tire for passenger car having excellent drainage performance in the running on the wet road surface and noise reduction without degrading various performances of the conventional all-season pneumatic radial tire, particularly the steering stability in the running on the dry road surface, performances on snow and braking performance on ice.

According to the invention, there is the provision of in a pneumatic radial tire comprising the features of claim 1. The tire comprises a tread of a block pattern defined by two circumferential main grooves arranged at a given interval in an axial direction of the tire and continuously extending in a circumferential direction of the tire and many slant grooves arranged at a given interval in the circumferential direction of the tire and extending obliquely with respect to the circumferential direction of the tire, in which the two circumferential main grooves are arranged on either side of the tread with respect to a pattern center to divide the tread into a central region located between the two circumferential main grooves and having a width corresponding to about 15%-45% of a tread width and both side regions each located between the circumferential main groove and an end of the tread, wherein (1) the slant groove is comprised of a steep slant groove segment extending at a relatively small inclination angle with respect to the circumferential direction and a gentle slant groove segment extending at a relatively large inclination angle with respect to the circumferential direction; (2) the steep slant groove segment is disposed in the central region of the tread and extends substantially in a straight line from an end of the groove segment opening to the circumferential main groove toward the other end opening to the other circumferential main groove; (3) the gentle slant groove segment is disposed in each of both side regions of the tread and extend so as to gradually increase the inclination angle with respect to the circumferential direction from an inner end of the groove segment opening to the circumferential main groove toward an outer end thereof opening to the tread end; (4) the gentle slant groove segment located in one of both side regions of the tread and the gentle slant groove segment located at the other side region are arranged in a herringbone form in pairs to form a directional tread pattern designating a rotating direction of the tire to be mounted onto a vehicle that a portion of a block defined between the gentle slant groove segments neat to a side of an equatorial plane of the tire precedently contacts with ground and a portion of the block located apart away from the equatorial plane succeedingly contacts with the ground in which the arrangement of the gentle slant groove segments located at one of both side regions is shifted by a half pitch to the arrangement of the gentle slant groove segments located at the other side region; and (5) a surface of an acute angle corner zone of each of the blocks defined by the circumferential main grooves and the steep slant groove segments and arranged in the central region of the tread is chamfered over a distance of 10-30 mm from a taper end in a longitudinal direction so as to gradually shallow from the taper end toward a thickened zone.

In a preferable embodiment of the invention, the steep slant groove segment extends at an inclination angle of 10-45° with respect to the circumferential direction and the gentle slant groove segment extends at an inclination angle of 30-90° with respect to the circumferential direction.

In another preferable embodiment of the invention, each of the blocks is provided with a plurality of sipes each extending at a relatively large inclination angle of 70-90° with respect to the circumferential direction and opening at its end to the circumferential main groove or the tread end.

In the other preferable embodiment of the invention, the number of the steep slant groove segments is not more than a half of the number of the gentle slant groove segments so as to make an interval between the steep slant groove segments in the circumferential direction not less than two times an interval between the gentle slant groove segments in the radial direction, and each of the blocks arranged in the central region of the tread is a parallelogram having a relatively large circumferential component as compared with each of the blocks arranged in both side regions of the tread.

In a still further preferable embodiment of the invention, the tire is provided with a belt comprised of at least two rubberized cord layers each containing cords arranged in parallel to each other at a cord angle of about 10-30° with respect to the circumferential direction of the tire, cords of which layers being crossed with each other with respect to an equator of the tire, and the extending direction of the cord in an outermost layer of the belt in the radial direction is crossed with the extending direction of the steep slant groove segment with respect to the equator of the tire.

In the other preferable embodiment of the invention, a surface of an acute angle corner zone of each of the blocks arranged in both side regions and defined between the circumferential main groove and the gentle slant groove segment is chamfered over a distance of 10-30 mm from a taper end in a longitudinal direction so as to gradually shallow from the taper end toward a thickened zone.

The pneumatic radial tire according to the invention has the aforementioned structure, and particularly forms a row of many blocks arranged at intervals in the circumferential direction of the tire in the central region of the tread, so that the rigidity in the central region of the tread becomes higher as compared with the tire having the center groove and hence the steering stability in the running on dry road surface, wet road surface and on snow is improved.

In the pneumatic radial tire according to the invention, the two circumferential main grooves continuously extending in the circumferential direction of the tire are arranged adjacent to either side of the block row formed in the central region of the tread, so that there is obtained an excellent drainage performance in the running on the wet road surface or excellent resistance to hydroplaning.

In the pneumatic radial tire according to the invention, a plurality of the steep slant groove segments are disposed in the central region of the tread, the shearing force of snow column through a lug component can be obtained without lowering the rigidity in the circumferential direction to establish the performance on snow and the performance on ice. In this case, the steep slant groove segments disposed in the central region of the tread extend at a relatively small inclination angle of, preferably 10-45° with respect to the circumferential direction, so that it is possible to smoothly conduct the drainage between the two circumferential main grooves to improve the drainage performance of the tire and also impact component of the tire is decreased to reduce the noise of the tire.

When the inclination angle of the steep slant groove segment exceeds 45° with respect to the circumferential direction, the branching and joining of water flow become difficult to degrade the drainage performance of the tire and also the rigidity of the block row in the circumferential direction is lowered to degrade the braking performance of the tire on ice. While, when it is less than 10°, the shearing force of snow column effective for the traction is not obtained, and also it is required that a pitch length between substantially parallelogrammatic blocks defined by the steep slant groove segments and the two circumferential main grooves is made large in order to ensure the distance between the steep slant groove segments in the axial direction of the tire and hence the pattern noise is degraded.

In the pneumatic radial tire according to the invention, the surface of the acute angle corner zone of each of the blocks defined by the circumferential main grooves and the steep slant groove segments and arranged in the central region of the tread is chamfered over a distance of 10-30 mm from the taper end of the block in the longitudinal direction thereof so as to gradually shallow from the taper end of the block toward the thickened zone thereof, so that the drainage performance in the running on the wet road surface or the resistance to hydroplaning is improved while ensuring the rigidity of the block.

In the pneumatic radial tire according to the invention, each of the blocks formed in the central region and both side regions of the tread is provided with a plurality of sipes each extending at a relatively large inclination angle of 70-90° with respect to the circumferential direction and opening at its end to the circumferential main groove or the tread end, whereby friction coefficient on ice through an edge effect of the sipe is increased to ensure the braking performance of the tire on ice.

Moreover, it is favorable that the sipe density in the block located at the outermost side of the tread in the widthwise direction is set to a low level among the blocks formed in the central region and both side regions of the tread in order to ensure the steering stability of the tire.

In the pneumatic radial tire according to the invention, the gentle slant groove segments extending at a relatively large inclination angle of 30-90° with respect to the circumferential direction are disposed in both sides of the tread between the circumferential main groove and the tread end and extend so as to gradually increase the inclination angle with respect to the circumferential direction from an inner end of the groove segment opening to the circumferential main groove toward an outer end thereof opening to the tread end, so that the drainage from the circumferential main groove toward the tread end is smoothly conducted to improve the drainage performance of the tire in the running on the wet road surface or the resistance to hydroplaning. Since the gentle slant groove segment is extended smoothly as mentioned above, a large shearing force is obtained by forming a strong snow column to improve a traction performance on snow.

In the pneumatic radial tire according to the invention, the gentle slant groove segment located in one of both side regions of the tread and the gentle slant groove segment located at the other side region are arranged in a herringbone form in pairs to form a directional tread pattern designating a rotating direction of the tire to be mounted onto a vehicle that a portion of a block defined between the gentle slant groove segments neat to a side of an equatorial plane of the tire precedently contacts with ground and a portion of the block located apart away from the equatorial plane succeedingly contacts with the ground in which the arrangement of the gentle slant groove segments located at one of both side regions is shifted by a half pitch to the arrangement of the gentle slant groove segments located at the other side region as previously mentioned, whereby the tire noise is reduced.

The invention will be described with reference to the accompanying drawings, wherein:
Fig. 1 is a partly enlarged plane view of an embodiment of the tread pattern in the tire according to the invention; and
Fig. 2 is a partly enlarged plane view of a tread pattern in the conventional tire.

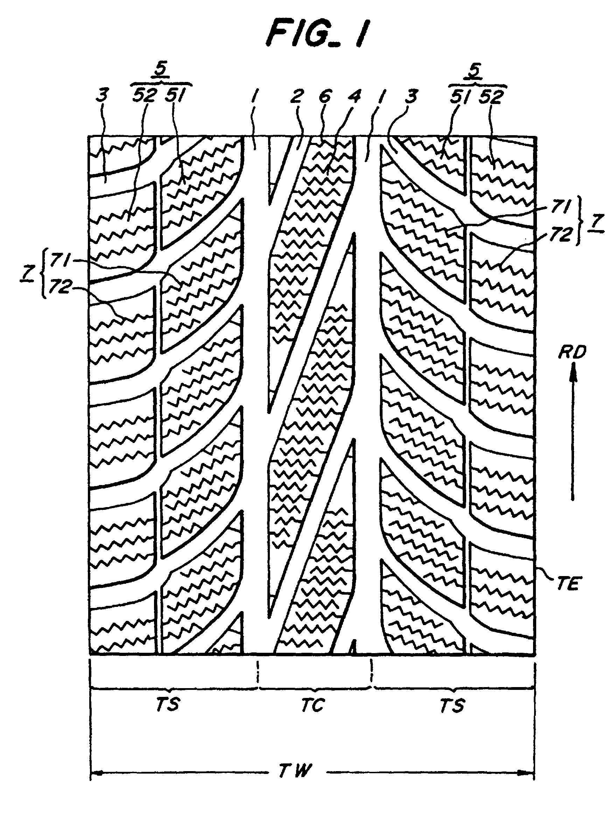

In Figs. 1 and 2, the tire has a tire size of 195/65R15 and a tread width TW of 146 mm.

The tire shown in Fig. 1 has a tread pattern comprising many blocks 4, 5 defined by two circumferential main grooves 1 arranged at a given interval in an axial direction of the tire and continuously extending in a circumferential direction of the tire and many slant grooves arranged at a given interval in the circumferential direction of the tire and extending obliquely with respect to the circumferential direction of the tire.

By arranging the two circumferential main grooves 1 on either side of the tread with respect to a pattern center is divided the tread into a central region TC located between the circumferential main grooves 1 and having a width corresponding to 25% of a tread width TW and both side regions TS each located between the circumferential main groove 1 and a tread end TE.

The slant groove is comprised of a steep slant groove segment 2 extending a relatively small inclination angle, e.g. an angle of 20° with respect to the circumferential direction and a gentle slant groove segment 3 extending at a relatively large inclination angle, e.g. angle of 40-85° with respect to the circumferential direction.

The steep slant groove segment 2 is disposed in the central region TC of the tread and extends substantially in a straight line from an end opening to the circumferential main groove 1 toward the other end facing to the other circumferential main groove 1.

The gentle slant groove segment 3 is disposed in each side region TS of the tread and extends from an end facing to the circumferential main groove 1 toward an outer end facing to the tread end TE so as to gradually increase the inclination angle from about 40° to about 85°.

The gentle slant groove segment 3 located in one of both side regions TS of the tread and the gentle slant groove segment 3 located at the other side region are arranged in a herringbone form in pairs to form a directional tread pattern designating a rotating direction RD (forward direction) of the tire to be mounted onto a vehicle that a portion of a block defined between the gentle slant groove segments neat to a side of an equatorial plane of the tire precedently contacts with ground and a portion of the block located apart away from the equatorial plane succeedingly contacts with the ground, in which the arrangement of the gentle slant groove segments 3 located at one of both side regions is shifted by a half pitch to the arrangement of the gentle slant groove segments 3 located at the other side region.

The surface of an acute angle corner zone of each of the blocks 4 defined by the circumferential main grooves 1 and the steep slant groove segments 2 and arranged in the central region TC of the tread is chamfered over a distance of 25 mm at a stepping-in side and a distance of 15 mm at a kicking-out side from a taper end in a longitudinal direction so as to gradually shallow from the taper end toward a thickened zone.

The surface of an acute angle corner zone of each of the blocks 51 arranged in both side regions TS and defined between the circumferential main groove 1 and the gentle slant groove segment 3 is chamfered over a distance of 15 mm from a taper end in a longitudinal direction so as to gradually shallow from the taper end toward a thickened zone.

Each of the blocks 4, 5 (51, 52) is provided with a plurality of sipes 6, 7 (71, 72) each opening at its end to the circumferential main groove 1 or the tread end TE. The sipe 6 disposed in the block 4 extends at an inclination angle of 90° with respect to the circumferential direction, and the sipe 71 disposed in the block 51 extends at an inclination angle of 70° with respect to the circumferential direction, and the sipe 72 disposed in the block 52 extends at an inclination angle of 80° with respect to the circumferential direction.

The number of the steep slant groove segments 2 is a half of the number of the gentle slant groove segments 3 so as to make an interval between the steep slant groove segments 2 in the circumferential direction two times an interval between the gentle slant groove segments 3 in the radial direction, and each of the blocks 4 arranged in the central region TC of the tread is a parallelogram having a relatively large circumferential component as compared with each of the blocks 5 arranged in both side regions TS of the tread.

The tire of the illustrated embodiment is provided at its inside with a belt comprised of two rubberized cord layers each containing cords arranged in parallel to each other at a cord angle of 20° with respect to the circumferential direction of the tire, cords of which layers being crossed with each other with respect to an equator of the tire. The extending direction of steel cord in an outermost layer of the belt in the radial direction is crossed with the extending direction of the steep slant groove segment 2 with respect to the equator of the tire.

The conventional tire shown in Fig. 2 has a tread pattern that a circumferential groove extending substantially in a straight line in the center region of the tread (which is so-called center groove) and two circumferential grooves extending zigzag in the circumferential direction are arranged on either side of the center groove and two circumferential grooves extending in a straight line in the circumferential direction are arranged at the outside thereof to form many blocks arranged at given intervals in the axial direction and circumferential direction of the tire together with many lateral grooves extending in a direction crossing the tread.

The tests for evaluating the drainage performance in the running on wet road surface, noise level of the tire, steering stability in the running on dry road surface, performances on snow and braking performance on ice are carried out with respect to the tire according to the invention and the conventional tire.

The drainage performance in the running on wet road surface is evaluated by a driver's feeling on a limit speed causing hydroplaning during the running on a wet road surface having a water depth of 5 mm. The steering stability in the running on dry road surface is evaluated by a driver's feeling when sport running is carried out on a circuit course of dry state under various running modes. The performances on snow are evaluated by a driver's total feeling on braking performance, traction performance, straight running performance and cornering performance on a test course of pressed snow state. The braking performance on ice is evaluated by a stopping distance when the vehicle is fully braked from a running state at a speed of 20 km/h on an iced course.

As a result of the above evaluation tests, when each performance is represented by an index on the basis that the conventional tire is 100 (the larger the index value, the better the performance), in the tire according to the invention, the steering stability on dry road surface is 105, and the performances on snow are 105, and the braking performance on ice is 110, and the drainage performance on wet road surface and the noise level are 120, respectively. That is, the tire according to the invention is superior in all of the above performances to the conventional tire.

As seen from the above, according to the invention, there can be provided an all-season pneumatic radial tire having excellent drainage performance in the running on wet road surface and noise level without degrading the steering stability in the running on dry road surface, the performances on snow and the braking performance on ice.

## Claims

1. A pneumatic radial tire comprising a tread having a block pattern defined by two circumferential main grooves (1) arranged at a given interval in the axial direction of the tire and continuously extending in the circumferential direction of the tire and slant grooves (2, 3) arranged at given intervals in the circumferential direction of the tire and extending obliquely with respect to the circumferential direction of the tire, in which the two circumferential main grooves (1) are arranged on either side of the tread with respect to the pattern center to divide the tread into a central region (TC) located between the two circumferential main grooves (1) and both side regions (TS) each located between one of said circumferential main grooves (1) and one end (TE) of the tread, wherein (i) the slant grooves (2, 3) are comprised of steep slant groove segments (2) extending at a relatively small inclination angle with respect to the circumferential direction and gentle slant groove segments (3) extending at a relatively large inclination angle with respect to the circumferential direction; (ii) the steep slant groove segments (2) are disposed in the central region (TC) of the tread and extend substantially in a straight line from one end of the groove segment opening to one circumferential main groove (1) toward the other end opening to the other circumferential main groove; (iii) the gentle slant groove segments (3) are disposed in each of both side regions (TS) of the tread and extend so as to gradually increase the inclination angle thereof with respect to the circumferential direction from the inner end of the groove segment opening to one of said circumferential main grooves (1) toward the outer end thereof opening to the tread end (TE); (iv) the gentle slant groove segments (3) located in one of both side regions (TS) of the tread and the gentle slant groove segments (3) located in the other side region (TS) are arranged in a herringbone directional tread pattern designating a rotating direction (RD) of the tire to be mounted onto a vehicle such that a portion of a block (5) defined between the gentle slant groove segments (3) and located nearer to the equatorial plane of the tire precedently contacts with the ground and a portion of the said block (5) located further from the equatorial plane succeedingly contacts with the ground; and (v) the surface of the acute angle comer zone of each of the blocks (4) defined by the circumferential main grooves (1) and the steep slant groove segments (2) and arranged in the central region (TC) of the tread is chamfered from a taper end in the circumferential direction so as to gradually shallow from the taper end toward a thickened zone, **characterized in that** the central region (TC) has a width corresponding to about 15%-45% of the tread width (TW), the arrangement of the gentle slant groove segments (3) located at one of both side regions is shifted by a half pitch with respect to the arrangement of the gentle slant groove segments (3) located at the other side region and the surface of said acute angle corner zone of each of said blocks (4) in the central region (TC) is chamfered over a distance of 10-30 mm.

2. A pneumatic radial tire as claimed in claim 1, **characterized in that** the steep slant groove segments (2) extend at an inclination angle of 10-45° with respect to the circumferential direction, and the gentle slant groove segments (3) extend at an inclination angle of 30-90° with respect to the circumferential direction.

3. A pneumatic radial tire as claimed in claim 1 or 2, **characterized in that** each of the blocks (4;5) is provided with a plurality of sipes (6;7) each extending at a relatively large inclination angle of 70-90° with respect to the circumferential direction and opening at its end to a circumferential main groove (1) or a tread end (TE).

4. A pneumatic radial tire as claimed in any of claims 1 to 3, **characterized in that** the number of the steep slant groove segments (2) is not more than half of the number of the gentle slant groove segments (3) so as to make the interval between the steep slant groove segments in the circumferential direction not less than two times the interval between the gentle slant groove segments in the radial direction, and each of the blocks (4) arranged in the central region (TC) of the tread is a parallelogram having a relatively large circumferential component as compared with each of the blocks (5) arranged in both side regions (TS) of the tread.

5. A pneumatic radial tire as claimed in any of claims 1 to 4, **characterized in that** the tire is provided with a belt comprised of at least two rubberized cord layers each containing cords arranged in parallel to each other at a cord angle of about 10-30° with respect to the circumferential direction of the tire, cords of which layers being crossed with each other with respect to an equator of the tire, and the extending direction of the cord in an outermost layer of the belt in the radial direction is crossed with the extending direction of the steep slant groove segments (2) with respect to the equator of the tire.

6. A pneumatic radial tire as claimed in any of claims 1 to 5, **characterized in that** a surface of an acute angle comer zone of each of the blocks (5) arranged in both side regions (TS) and defined between the circumferential main groove (1) and the gentle slant groove segments (3) is chamfered over a distance of 10-30 mm from a taper end in a longitudinal direction so as to gradually shallow from the taper end toward a thickened zone.

## Patentansprüche

1. Radialer Luftreifen, aufweisend eine Lauffläche mit einem Blockmuster, das definiert ist durch zwei Hauptumfangsrillen (1), die in einem vorgegebenen Abstand in der axialen Richtung des Reifens angeordnet sind und sich kontinuierlich in der Umfangsrichtung des Reifens erstrecken, und schräge Rillen (2, 3), die in vorgegebenen Abständen in der Umfangsrichtung des Reifens angeordnet sind und sich schräg zu der Umfangsrichtung des Reifens erstrecken, wobei die zwei Hauptumfangsrillen (1) auf den beiden Seiten der Lauffläche bezüglich der Mustermitte angeordnet sind, um die Lauffläche zu unterteilen in ein mittleres Gebiet (TC), das zwischen den zwei Hauptumfangsrillen (1) gelegen ist, und zwei Seitengebiete (TS), von denen jedes zwischen einer der Hauptumfangsrillen (1) und einem Rand (TE) der Lauffläche gelegen ist, wobei (i) die schrägen Rillen (2, 3) bestehen aus steilen schrägen Rillensegmenten (2), die sich unter einem relativ kleinen Neigungswinkel bezüglich der Umfangsrichtung erstrecken, und flachen schrägen Rillensegmenten (3), die sich unter einem relativ großen Neigungswinkel bezüglich der Umfangsrichtung erstrecken; (ii) die steilen schrägen Rillensegmente (2) in dem mittleren Gebiet (TC) der Lauffläche angeordnet sind und sich im wesentlichen geradlinig von einem Ende des Rillensegments, das in eine Hauptumfangsrille (1) mündet, zu dem anderen Ende, das in die andere Hauptumfangsrille mündet, hin erstrecken; (iii) die flachen schrägen Rillensegmente (3) in den beiden Seitengebieten (TS) der Lauffläche angeordnet sind und sich so erstrecken, daß ihr Neigungswinkel bezüglich der Umfangsrichtung von dem inneren Ende des Rillensegments, das in eine der Hauptumfangsrillen (1) mündet, zu dem äußeren Endes des Rillensegments, das in den Laufflächenrand (TE) mündet, hin allmählich zunimmt; (iv) die flachen schrägen Rillensegmente (3), die in einem der beiden Seitengebiete (TS) der Lauffläche gelegen sind, und die flachen schrägen Rillensegmente (3), die in dem anderen Seitengebiet (TS) gelegen sind, in einem gerichteten Fischgräten-Laufflächenmuster angeordnet sind, das eine Rotationsrichtung (RD) des an einem Fahrzeug anzubringenden Reifens so bezeichnet, daß ein Bereich eines Blocks (5), der zwischen den flachen schrägen Rillensegmenten (3) definiert ist und näher bei der Äquatorebene des Reifens gelegen ist, den Boden früher berührt, und ein Bereich des Blocks (5), der weiter weg von der Äquatorebene gelegen ist, den Boden später berührt; und (v) die Oberfläche der spitzwinkligen Eckzone von jedem der Blöcke (4), die durch die Hauptumfangsrillen (1) und die steilen schrägen Rillensegmente (2) definiert sind, und in dem mittleren Gebiet (TC) der Lauffläche angeordnet sind, von einem spitz zulaufenden Ende in der Umfangsrichtung so abgeschrägt ist, daß sie von dem spitz zulaufenden Ende zu einer dickeren Zone hin allmählich flacher wird, **dadurch gekennzeichnet, daß** die mittlere Zone (TC) eine Breite hat, die ungefähr 15-45% der Laufflächenbreite (TW) entspricht, die Anordnung der flachen schrägen Rillensegmente (3), die in einem der beiden Seitengebiete gelegen sind, um eine halbe Teilungslänge bezüglich der Anordnung der flachen schrägen Rillensegmente (3), die in dem anderen Seitengebiet gelegen sind, verschoben ist, und die Oberfläche der spitzwinkligen Eckzone von jedem der Blöcke (4) in dem mittleren Gebiet (TC) über eine Entfernung von 10-30 mm abgeschrägt ist.

2. Radialer Luftreifen wie in Anspruch 1 beansprucht, **dadurch gekennzeichnet, daß** die steilen schrägen Rillensegmente (2) sich unter einem Neigungswinkel von 10-45° bezüglich der Umfangsrichtung erstrecken, und die flachen schrägen Rillensegmente (3) sich unter einem Neigungswinkel von 30-90° bezüglich der Umfangsrichtung erstrecken.

3. Radialer Luftreifen wie in Anspruch 1 oder 2 beansprucht, **dadurch gekennzeichnet, daß** jeder der Blöcke (4; 5) mit einer Vielzahl von Einschnitten (6; 7) versehen ist, von denen jeder sich unter einem relativ großen Neigungswinkel von 70-90° bezüglich der Umfangsrichtung erstreckt und an seinem Ende in eine Hauptumfangsrille (1) oder einen Laufflächenrand (TE) mündet.

4. Radialer Luftreifen wie in irgendeinem der Ansprüche 1 bis 3 beansprucht, **dadurch gekennzeichnet, daß** die Anzahl der steilen schrägen Rillensegmente (2) nicht größer als die halbe Anzahl der flachen schrägen Rillensegmente (3) ist, so daß der Abstand zwischen den steilen schrägen Rillensegmenten in der Umfangsrichtung nicht kleiner als der doppelte Abstand zwischen den flachen schrägen Rillensegmenten in der radialen Richtung ist, und jeder der in dem mittleren Gebiet (TC) der Lauffläche angeordneten Blöcke (4) ein Parallelogramm ist, das eine relativ große Umfangskomponente hat, verglichen mit jedem der in den beiden Seitengebieten (TS) der Lauffläche angeordneten Blöcke (5).

5. Radialer Luftreifen wie in irgendeinem der Ansprüche 1 bis 4 beansprucht, **dadurch gekennzeichnet, daß** der Reifen mit einem Gürtel versehen ist, der aus mindestens zwei gummigetränkten Cordschichten besteht, von denen jede Cordfäden enthält, die unter einem Cordfadenwinkel von ungefähr 10-30° bezüglich der Umfangsrichtung des Reifens parallel zueinander angeordnet sind, wobei die Cordfäden dieser Schichten sich bezüglich der Äquatorebene des Reifens überkreuzen, und die Verlaufsrichtung des Cordfadens in der in der radialen Richtung äußersten Schicht des Gürtels sich mit der Verlaufsrichtung der steilen schrägen Rillensegmente (2) bezüglich des Äquators des Reifens überkreuzt.

6. Radialer Luftreifen wie in irgendeinem der Ansprüche 1 bis 5 beansprucht, **dadurch gekennzeichnet, daß** die Oberfläche einer spitzwinkligen Eckzone von jedem der Blöcke (5), die in den beiden Seitengebieten (TS) angeordnet sind und zwischen der Hauptumfangsrille (1) und den flachen schrägen Rillensegmenten (3) definiert sind, über eine Entfernung von 10-30 mm von einem spitz zulaufenden Ende in der Längsrichtung so abgeschrägt ist, daß sie von dem spitzwinkligen Ende zu einer dickeren Zone hin allmählich flacher wird.

## Revendications

1. Un bandage pneumatique radial comprenant une bande de roulement possédant un dessin à blocs défini par deux rainures circonférentielles principales (1) agencées à intervalle donné dans la direction axiale du pneu et s'étendant de manière continue dans la direction circonférentielle du pneu et des rainures inclinées (2, 3) agencées à intervalles donnés dans la direction circonférentielle du pneu et s'étendant obliquement par rapport à la direction circonférentielle du pneu, dans lequel les deux rainures circonférentielles principales (1) sont agencées sur l'un ou l'autre côté de la bande de roulement par rapport au centre du dessin pour diviser la bande de roulement en une région centrale (TC) située entre les deux rainures circonférentielles principales (1) et deux régions latérales (TS) chacune étant située entre une desdites rainures circonférentielles principales (1) et une extrémité (TE) de la bande de roulement, dans lequel (i) les rainures inclinées (2, 3) sont constituées de segments de rainure fortement inclinés (2) s'étendant en formant un angle d'inclinaison relativement petit par rapport à la direction circonférentielle et de segments de rainure faiblement inclinés (3) s'étendant en formant un angle d'inclinaison relativement grand par rapport à la direction circonférentielle; (ii) les segments de rainure fortement inclinés (2) sont disposés dans la région centrale (TC) de la bande de roulement et s'étendent essentiellement en ligne droite à partir d'une extrémité du segment de rainure s'ouvrant sur une rainure circonférentielle principale (1) vers l'autre extrémité s'ouvrant sur l'autre rainure circonférentielle principale; (iii) les segments de rainure faiblement inclinés (3) sont disposés dans chacune des deux régions latérales (TS) de la bande de roulement et s'étendent de manière à augmenter graduellement leur angle d'inclinaison par rapport à la direction circonférentielle à partir de l'extrémité intérieure du segment de rainure s'ouvrant sur une desdites rainures circonférentielles principales (1) vers leur extrémité extérieure s'ouvrant sur l'extrémité de la bande de roulement (TE); (iv) les segments de rainure faiblement inclinés (3) situés dans une des deux régions latérales (TS) de la bande de roulement et les segments de rainure faiblement inclinés (3) situés dans l'autre région latérale (TS) sont agencés en un dessin de bande de roulement directionnel en arêtes de hareng indiquant la direction de rotation (RD) du pneu qui doit être monté sur un véhicule de sorte qu'une portion d'un bloc (5) défini entre les segments de rainure faiblement inclinés (3) et situé plus près du plan équatorial du pneu entre d'abord en contact avec le sol et une portion dudit bloc (5) situé plus loin du plan équatorial entre ensuite en contact avec le sol; et (v) la surface de la zone de coin à angle aigu de chacun des blocs (4) définis par les rainures circonférentielles principales (1) et les segments de rainure fortement inclinés (2) et agencés dans la région centrale (TC) de la bande de roulement est chanfreinée à partir d'une extrémité en pointe dans la direction circonférentielle de manière à devenir graduellement peu profonde à partir de l'extrémité en pointe vers une zone plus épaisse, **caractérisé en ce que** la région centrale (TC) possède une largeur correspondant à environ 15%-45% de la largeur de la bande de roulement (TW), l'agencement des segments de rainure faiblement inclinés (3) situés dans une des deux régions latérales est décalé d'un demi-pas par rapport à l'agencement des segments de rainure faiblement inclinés (3) situés dans l'autre région latérale et la surface de ladite zone de coin à angle aigu desdits blocs (4) dans la région centrale (TC) est chanfreinée sur une distance de 10-30 mm.

2. Un bandage pneumatique radial comme revendiqué dans la revendication 1, **caractérisé en ce que** les segments de rainure fortement inclinés (2) s'étendent en formant un angle d'inclinaison de 10-45° par rapport à la direction circonférentielle, et les segments de rainure faiblement inclinés (3) s'étendent en formant un angle d'inclinaison de 30-90° par rapport à la direction circonférentielle.

3. Un bandage pneumatique radial comme revendiqué dans la revendication 1 ou 2, **caractérisé en ce que** chacun des blocs (4; 5) est pourvu d'une multitude de lamelles (6; 7) chacune s'étendant en formant un angle d'inclinaison relativement grand de 70-90° par rapport à la direction circonférentielle et s'ouvrant en son extrémité sur une rainure circonférentielle principale (1) ou une extrémité de la bande de roulement (TE).

4. Un bandage pneumatique radial comme revendiqué dans une quelconque des revendications 1 à 3, **caractérisé en ce que** le nombre de segments de rainure fortement inclinés (2) n'est pas supérieur à la moitié du nombre de segments de rainure faiblement inclinés (3) de manière à ne pas rendre l'intervalle entre les segments de rainure fortement inclinés dans la direction circonférentielle inférieur à deux fois l'intervalle entre les segments de rainure faiblement inclinés dans la direction radiale, et chacun des blocs (4) agencés dans la région centrale (TC) de la bande de roulement est un parallélogramme possédant une composante circonférentielle relativement grande comparativement à chacun des blocs (5) agencés dans les deux régions latérales (TS) de la bande de roulement.

5. Un bandage pneumatique radial comme revendiqué dans une quelconque des revendications 1 à 4, **caractérisé en ce que** le pneu comporte une ceinture constituée d'au moins deux couches de cordes caoutchoutées chacune contenant des cordes agencées parallèlement les unes aux autres en formant un angle de corde d'environ 10-30° par rapport à la direction circonférentielle du pneu, cordes dont les couches sont croisées les unes avec les autres par rapport à l'équateur du pneu, et la direction d'extension de la corde dans la couche la plus extérieure de la ceinture dans la direction radiale est croisée avec la direction d'extension des segments de rainure fortement inclinés (2) par rapport à l'équateur du pneu.

6. Un bandage pneumatique radial comme revendiqué dans une quelconque des revendications 1 à 5, **caractérisé en ce que** la surface d'une zone de coin à angle aigu de chacun des blocs (5) agencés dans les deux régions latérales (TS) et définis entre la rainure circonférentielle principale (1) et les segments de rainure faiblement inclinés (3) est chanfreinée sur une distance de 10-30mm à partir d'une extrémité en pointe dans une direction longitudinale de manière à devenir graduellement peu profonde à partir de l'extrémité en pointe vers une zone plus épaisse.
